# EUROPÄISCHE PATENTSCHRIFT

(11) **EP 1 373 615 B1**
(45) Veröffentlichungstag und Bekanntmachung des Hinweises auf die Patenterteilung: **06.08.2008**
(21) Anmeldenummer: 02766614.8
(22) Anmeldetag: 02.04.2002
(51) Int. Cl.: D03D 1/02, B60R 21/16

(54) **VERFAHREN ZUM WEBEN EINES LUFTSACKS**
METHOD FOR WEAVING AN AIRBAG
PROCEDE DE TISSAGE D'UN SAC GONFLABLE

(30) Priorität: 30.03.2001 DE 10115890
(43) Veröffentlichungstag der Anmeldung: 02.01.2004
(73) Patentinhaber: ITG Automotive Safety Textiles GmbH, 79689 Maulburg (DE)
(72) Erfinder: ESCHBACH, Thomas, 79790 Rheinheim (DE); BECKER, Michael, 79669 Zell im Wiesental (DE)
(74) Vertreter: Fischer, Matthias
(86) Internationale Anmeldenummer: PCT/EP2002/003629
(87) Internationale Veröffentlichungsnummer: WO 2002/088443

(56) Entgegenhaltungen:
- US-A- 4 025 684
- US-A- 5 275 434
- US-A- 5 865 464
- US-A- 6 135 488

## Beschreibung

Die Erfindung betrifft ein Verfahren zum Weben eines wenigstens zweilagigen, einstückigen Luftsacks auf einer Breitwebmaschine.

Es sind einstückig gewebte Luftsäcke, sogenannte OPW-Luftsäcke bekannt, die bei der Herstellung von Airbagsystemen in Fahrzeugen Verwendung finden. Bei derartigen OPW-Luftsäcken, in die im Einsatzfall über sogenannte Gaslanzen Aufblasgas eingeführt wird, wurden während des Aufblasvorgangs entstehende Risse der Luftsäcke in den Bereichen festgestellt, in denen aus der Gaslanze in dem Luftsack Gas eingeblasen wird. Gaslanzen haben oft hintereinanderliegende, zur Gasströmungsrichtung etwa querliegende Schlitze, sogenannte Einblaskiemen, durch die das Gas in den Luftsack an mehreren Stellen eingeführt wird. Die eben genannten Luftsackrisse können hervorgerufen werden z.B. aufgrund unterschiedlicher Gasgenerator-Konstruktion und der darauf beruhenden sogenannten Generatoraggressivität. Man spricht von einer Streuung innerhalb und zwischen Generatorchargen. Die Luftsackrisse können ebenfalls durch die Positionierung der Einblaskiemen zur Luftsackkammer beeinflußt werden. Desweiteren häufen sich Luftsackrisse in Grenzbereichen betreffend die Generatoraggressivität sowie die Umgebungstemperatur, in der der Luftsack zum Einsatz kommt.

Aus der US-A-5,275,434 (Hirabayashi et al.) ist ein zweilagiger auf einer Webmaschine gewebter Airbag bekannt, wobei in wenigstens einer Lage ein verstärkter Bereich angeordnet ist, der Verstärkungsfäden enthält, die einen höheren Zugfestigkeitskoeffizienten als die restlichen Fäden haben. Eine Verwendung von Schußfäden unterschiedlicher Stärken, also Querschnitte, wobei zur individuellen Einstellbarkeit einer unterschiedlichen zur Verfügung stehenden Gewebemasse in bestimmten Bereichen Schußfäden einer bestimmten Stärke nur über bestimmte Kettfadenlängenbereiche eingetragen werden, oder ein Hinweis hierauf ist D1 nicht zu entnehmen.

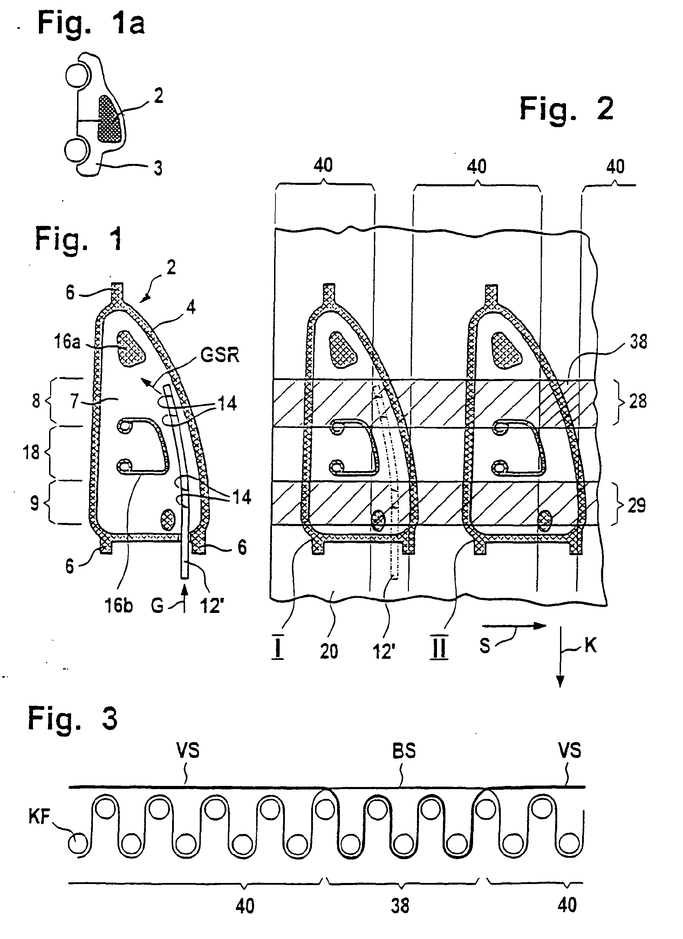

Aus der US-A-5,865,464 (Kanuma et al.) ist ein zweilagiger auf einer Webmaschine gewebter Airbag bekannt, wobei zur Verringerung der Permeabilität ausgewählte Bindungsarten und ausgewählte Gewebedichten vorgeschlagen werden. Hierbei wird, wie insbesondere aus den Fig. 2 (A) und (B), 4, 5, 8 und 9 (B), sowie aus Sp. 10, Z. 46 bis Sp. 11, Z. 8 und Sp. 11., Z. 55 bis Sp. 12, Z. 10 und auch Beispiel 5 zu entnehmen ist, zur Verstärkung der Generatoranschlußöffnung 6 ein diese umgebendes zusätzliches Gewebestück 5 angenäht, vorzugsweise angeklebt, welches aus Fäden gewebt sein kann, deren Stärke sich von der Stärke der im restlichen Gewebe des Airbags verwendeten Fäden unterscheiden kann (Beispiel 5).

Die US-A-4,025,684 (Neidhardt) offenbart die Merkmale des Oberbegriffes des Anspruchs 1 und beschreibt ein mit sog. Basisfäden gewebtes zweilagiges schlauchförmiges Gewebe, wobei die beiden Lagen durch Hilfsfäden, sogenannte "Connecting Fibers" und "Distance Fibers" miteinander verbunden werden, deren Spezialität nach der vorliegenden Entgegenhaltung darin besteht, daß sie sich eben nicht in *einer* Lage allein befinden, sondern die beiden Lagen miteinander für eine beschränkte Zeitdauer verbunden werden. Die Funktion der "Distance Fibers" besteht darin, daß sie im Anwendungsfall den Abstand zwischen den beiden Gewebelagen bestimmen, während die "Connecting Fibers" die beiden Gewebelagen in bestimmten Bereichen fest miteinander verbinden.

Schließlich wird in der US-A-6,135,488 (Bosio et al.) ein Luftsack für ein Fahrgastrückhaltesystem offenbart, der aus zwei Teilen zusammengenäht ist (siehe Spalte 2, die letzten beiden Absätze). Der Airbag weist sogenannte "long floating threads 1" (Fig. 1) aus Plastik auf, die girlandenartig zum Airbaginneren zeigend zusammen mit den Schußfäden verwebt werden, so daß sie nur etwa alle 10 Millimeter mit einem Kettfaden eingebunden sind. Die Funktion der "long floating threads 1" besteht darin, daß sie einen niedrigeren Schmelzpunkt als die eigentlichen Schußfäden haben und im Aufblasfall beim thermischen Verarbeiten der Explosionsgase helfen sollen. Die langen flottierenden Fäden 1 haben keine Gewebeverstärkungsfunktion und können diese, da sie nur in größeren Abständen im Gewebe das Airbags "eingehängt" sind, auch nicht übernehmen. Ihre Funktion besteht ausschließlich in der Dissipation der Wärme der Aufblasgases zur Verringerung von dessen Temperatur (siehe insbesondere Sp. 1, Z. 51 bis Sp. 2, Z. 7).

Es ist Aufgabe der Erfindung, ein Verfahren zum Weben eines wenigstens zweilagigen, einstückigen Luftsacks vorzuschlagen, bei dem die aus dem Stand der Technik bekannten Nachteile, insbesondere im Bereich der Gaseinströmung eines Luftsacks auftretende Geweberisse, nicht mehr aufreten oder zumindest sehr stark reduziert.

Die Aufgabe wird gelöst durch ein Verfahren gemäß Anspruch 1. Die sich aufgrund des Verfahrens ergebende individuell einstellbare unterschiedliche zur Verfügung stehende Gewebemasse im OPW-Luftsack läßt eine individuell orientierte Verstärkung des Luftsackgewebes zu. Somit ergibt sich an einer hoch beanspruchten Stelle, an der bisher Luftsackrisse zu beklagen waren, eine Gewebequalität höherer Widerstandsfähigkeit u.a. auch durch Erhöhung der Wärmekapazität in den neuralgischen Bereichen des Luftsacks, indem nämlich die Einblaslanzen ihren sogenannten Einblaskiemenbereich aufweisen. Damit kann man vorteilhafterweise in gewünschten Luftsackpositionen in dem Gewebe durch Erhöhung der Gewebemasse eine sowohl mechanisch als auch thermisch höhere Festigkeit und damit die Vermeidung von Luftsackrissen erreichen.

Weiter wird in dem gewünschten Bereich ein Schußgarn eingesetzt, das im Vergleich zum Standardgarn eine mindestens um 25 % höhere Garnstärke hat. Zum besseren Verständnis der Erfindung wird diese anhand einer Zeichnung im folgenden erläutert.
- Fig. 1: zeigt sehr schematisch dargestellt einen Luftsack, in diesem Fall einen Seitenairbag für einen Pkw, der sich über die Seitenscheiben des rechten Vorder- und Hintersitzes des Pkw erstreckt.
- Fig. 1a: zeigt schematisch die Anordnung eines Luftsacks in einem Pkw.
- Fig. 2: zeigt ebenfalls stark schematisiert einen Ausschnitt aus einem Gewebe, in dem zwei nebeneinanderliegende vollständig auf der Webmaschine gewebte Luftsäcke zu erkennen sind, wobei besondere Bereiche markiert sind.
- Fig. 3: zeigt stark schematisiert einen Querschnitt durch eine Lage eines Luftsacks, bei der Schußfäden unterschiedlicher Stärke verwebt wurden.

Figur 1 zeigt einen beispielhaft skizzierten Luftsack 2 von der Seite. Die Einbaulage dieses Luftsacks 2 in ein Kraftfahrzeug könnte für die rechten Seitenscheiben eines an der linken Seitenkante der Zeichnung nach oben fahrenden (Fig. 1a) Fahrzeugs gedacht sein. Der Luftsack 2 ist von einem einlagig gewebten, in der Zeichnung schraffiert dargestellten Rand 4 eingefaßt. Entsprechend der Lage im Fahrzeug "vorne" und "hinten" angeordnete Befestigungslaschen 6 dienen zur nicht näher beschriebenen Befestigung des Luftsacks 2. Die Position des Luftsacks 2 in einem Fahrzeug 3 ist schematisch in Figur 1a angedeutet. Der Luftsack 2 ist in unterschiedliche Abschnitte aufgeteilt, nämlich einen Vordersitzbereich 8 und einen Rücksitzbereich 9, in dem im Falle einer Kollision der Kopf eines Insassen in Richtung der Seitenscheibe des Fahrzeugs prallen kann. Aus diesem Grund muß der Luftsack 2 in den genannten Bereichen 8 und 9 am frühesten aufgeblasen werden. Um den Luftsack aufzublasen, ist eine Einblaslanze 12 in den Innenraum 7 des Luftsacks 2 eingeführt, wobei die Einblaslanze 12 in den Bereichen 8 und 9 Gaseinblasöffnungen 14 aufweist. Das Gas strömt in die genannten Bereiche etwa in Richtung eines Pfeils GSR und verteilt sich dann im Luftsack. Der schraffiert dargestellte Rand 4 des Luftsacks 2 ist, wie eben gesagt, einlagig gewebt, während der vom Rand 4 umfaßte Innenbereich 7 des Luftsacks 2 hier beispielsweise zweilagig gewebt ist, wobei jedoch einige Bereiche innerhalb des Luftsacks 2 zur besonderen Formgebung des Luftsacks 2 bzw. zur Orientierung in den Luftsack 2 einströmenden Gases einlagig gewebte Verbindungsbereiche in Form von Flächen 16a oder Stegen 16b eingewebt sind. So ist beispielsweise in der Nachbarschaft der sogenannten (nicht gezeigten) A-Säule des Fahrzeugs ein Bereich 16a und im Bereich 18 in der Nachbarschaft der sogenannten (nicht gezeigten) B-Säule ein Stegbereich 16b einlagig gewebt. In diesen Bereichen 16a, 16b sind obere und untere Gewebelagen miteinander verbunden.

Das für einen Luftsack üblicherweise ziemlich fein ausgeführte Gewebe wird im Bereich der Gaseinblasöffnungen 14 der Gaslanze 12 im Gegensatz zu anderen Bereichen des Luftsacks 2 außerordentlich stark beansprucht. Das mit hoher Geschwindigkeit bzw. auch starkem Impuls und möglicherweise unter großer Hitze einströmende Gas beansprucht die Luftsackoberfläche bzw. das Luftsackgewebe in den entsprechenden Bereichen außerordentlich.

Figur 2 zeigt einen Ausschnitt eines Gewebes 20, in dem zwei eingewebte Luftsäcke I und II zu erkennen sind. Die Luftsäcke I und II sind hier noch nicht ausgetrennt aus dem Gewebe 20 dargestellt, wobei im Luftsack I eine eingeführte, gestrichelt dargestellte Einblaslanze 12' angedeutet ist, die analog zur in Figur 1 dargestellten Einblaslanze 12 in den Bereichen 8 und 9 angeordnete Gaseinblasöffnungen aufweist. Das Gewebe 20 ist in dem hier gezeigten Beispiel im nicht schraffierten, außerhalb der Luftsäcke I und II liegenden Bereich im Prinzip einlagig gewebt. Hier geht es im wesentlichen um den Erhalt einer gewebten Struktur, so daß auf die hier eingesetzten Verbindungen nicht besonders eingegangen werden muß. Interessant ist in dem in Figur 2 dargestellten Gewebe 20 die besondere Verwendung unterschiedlicher Schußfadenstärken. Ein in Richtung des Pfeils S quer zu gemäß Pfeil K verlaufenden Ketten eingetragener Schußfaden wird beispielsweise über die gesamte Breite des hier nur ausgeschnitten dargestellten Gewebes 20 eingetragen. Um nun in den zuvor genannten Bereichen 8 und 9 eine höhere Festigkeit der Wandung des Luftsacks 2 zu erreichen, werden erfindungsgemäß (in Fig. 2) in den Bereichen 28 und 29 dadurch widerstandsfähigere Luftsackbereiche geschaffen, daß in den genannten Bereichen in Schußrichtung S ein Garn VS eingesetzt wird, welches im Vergleich zu dem in den anderen Bereichen des Gewebes 20 verwendeten Schußfäden eine um 25 % größere Garnstärke hat. Dieses sogenannte Verstärkungsschußgarn VS wird bei unveränderter Schußdichte in das Gewebe 20 eingetragen, so daß in den Bereichen 28 und 29 eine entsprechende Erhöhung der Gewebemasse und damit der gewünschten Gewebefestigkeit erzielt wird. Mit dieser erfinderischen Verfahrensweise wird einerseits in den gewünschten Bereichen innerhalb einer Lage des Luftsacks die gewünschte Verstärkung erreicht. Es wird der verstärkende Effekt jedoch auch in Bereichen des Luftsacks erzielt, in denen der Effekt garnicht benötigt wird. Dadurch kann die Steifigkeit des Luftsacks und daneben das Packvolumen des Luftsacks je nach den individuellen Einbaubedingungen ungünstig sein.

Eine Verbesserung läßt sich dadurch erreichen, daß in den Verstärkungsbereichen 28 und 29 eine Schußfolge gewählt wird, in der im Wechsel unterschiedliche Verstärkungsschußgame VS eingetragen werden, beispielsweise Verstärkungsschußfäden der Stärken dtex 470 im nach einer vorher definierten Folge ablaufenden Wechsel mit einer Verstärkungsschußfadenqualität von 350 dtex. Dadurch läßt sich die Steifigkeit und damit auch das Packvolumen des Luftsacks gegenüber einem mit nur einer Verstärkungsschußfadenstärke gewebten Luftsack entsprechend reduzieren. Hinzu kommt hierbei, daß eine Übersättigung des Gewebes in den genannten Bereichen (Bei nur einer Verstärkungsschußgarnstärke und unveränderter Schußdichte kann eine Übersättigung des Gewebes entstehen, d.h. das Gewebe bildet Vortuch und u.a. sogar Falten, da man sich im absoluten Grenzbereich der aufnehmbaren Gewebedichte bewegt) reduziert wird.

In einer Optimierung der eben beschriebenen Verfahrensweise, bei der das die gesamte Breite des Gewebes in den Bereichen 28 und 29 verstärkende Verstärkungsschußgarn VS eingetragen wird, wird Verstärkungsschußgarn VS nur in bestimmten Bereichen quer über das Gewebe eingetragen. Um nun zu vermeiden, daß die Verstärkungsbereiche sich über die gesamte Gewebebreite, d.h. über die gesamte Luftsack"höhe" ausdehnen, werden die Verstärkungsschüsse VS nur in (in Figur 2 mit dem Bezugszeichen 38 gekennzeichneten) bestimmten Bereichen aktiviert, in denen tatsächlich auch durch das Aufblasen des Luftsacks durch die Gaseinblasöffnungen 14 der Gaslanze 12 einströmenden Gases zu erwarten ist.

Bei dieser Methode wird ein Verstärkungsschußfaden VS, wie auch in Figur 3 schematisch dargestellt ist, nur im Bereich 38 in das Gewebe eingebunden, während er außerhalb des Bereichs 38 als flottierender Verstärkungsschuß auch außerhalb des Gewebes liegt. Analog zur Lage des Verstärkungsschusses VS verläuft ein Basisschußfaden BS im Bereich 38 flottierend außerhalb des Gewebes 20, während er in den restlichen Gewebebereichen in herkömmlicher Art in die Lagen des Gewebes eingebunden ist.

Figur 3 zeigt im Schnitt dargestellte Kettfäden KF, die zusammen mit dem Basisschußfaden BS und dem Verstärkungsschußfaden VS eine Lage des Luftsacks 2 bilden. Selbstverständlich ist die Darstellung nach Figur 3 nur schematisch und auch vollkommen unmaßstäblich ausgeführt. Der Fachmann erkennt anhand der schematischen Darstellung die unterschiedlichen Prinzipien und Bindungsarten der unterschiedlichen Schußfäden mit den Kettfäden. In Bereichen 40 liegt der Verstärkungsfaden VS flottierend, während im Bereich 38 der Basisschußfaden flottierend außerhalb des Gewebes liegt. Vorteilhafterweise können die Verstärkungsschußfäden VS noch an der Webmaschine in den flottierenden Bereichen abgetrennt werden, so daß sie tatsächlich nur in den gewünschten Bereichen 38 des Gewebes 20 vorliegen. Diese Verfahrensweise hat viele Vorteile. Es wird das Gewebe nur in den Bereichen verstärkt, in denen Streß zu erwarten ist. Das Packvolumen wird gleichzeitig nahezu auf das Niveau des Standardgewebes reduziert. Ebenso wird die Steifigkeit des Luftsacks minimiert.

Selbstverständlich umfaßt das erfindungsgemäße Verfahren auch ein Verfahren zum Weben eines Luftschlauchs für einen sog. Airbelt, also einen aufblasbaren Sicherheitsgurt. Bei derartigen Luftschläuchen ist es von Vorteil, wenn in Gewebebereichen, in denen beispielsweise eine besondere Elastizität gewünscht wird, Schußfäden mit besonderer Elastizität, z. B. Monofilfäden eingeschossen werden. So können Gewebebereiche, die im fertigen Airbelt-Sicherheitsgurt "nur" Luftsackfunktion haben, aus sehr feinen weichen Schußfäden gewebt werden und andere Gewebebereiche, die (auch) Gurtbandfunktion haben, wenigstens zum Teil mit Monofilfäden gewebt werden. Dadurch wird die kostengünstigere und mehr funktionsspezifische Herstellung von Airbelts möglich.

In der vorhergehenden Beschreibung wird aus verständlichen Gründen nicht auf die individuelle Bindungsart der restlichen Bereiche des Luftsacks (einlagiger Bereich, zweilagiger Bereich etc.) eingegangen, da es sich hier um dem Fachmann bekannte Grundlagen handelt.

Die Durchführung des erfindungsgemäßen Verfahrens in der in vorangehender Beschreibung dargestellten Weise ist auch nur beispielhaft zu sehen. Der Einsatz einer Jacquard-Webmaschine ermöglicht die individuelle lokale Einbindung von Verstärkungsschußfäden unter Einsatz der eben beschriebenen "Stickschußtechnologie" mit allen ihren ebenfalls beschriebenen Vorteilen. Auch die Anordnung weiterer nebeneinanderliegender Luftsäcke in einer Gewebebahn ist möglich.

## Patentansprüche

1. Verfahren zum Weben eines wenigstens zweilagigen, einstückigen Luftsacks (2) oder Luftschlauchs auf einer Webmaschine, wobei in wenigstens einer Lage Schußfäden unterschiedlicher Stärken verwebt werden,
a) wobei Schußfäden (VS) einer bestimmten Stärke nur über bestimmte Kettfadenlängenbereiche (8, 9) eingetragen werden, **dadurch gekennzeichnet,**
b) **daß** einerseits Standardschußfäden einer ersten Garnstärke (BS) und andererseits Schußfäden (VS) mit einer insbesondere mindestens um 25% höheren zweiten Garnstärke eingetragen werden, und
c) **daß** die Schußfäden (VS) mit der höheren zweiten Garnstärke bei unveränderter Schußdichte eingetragen werden.

2. Verfahren nach Anspruch 1, **dadurch gekennzeichnet, daß** Schußfäden (VS) einer höheren dritten Garnstärke eingetragen werden.

3. Verfahren nach Anspruche 1 oder 2, **dadurch gekennzeichnet, daß** ein Teil der Schußfäden (VS) nur in bestimmten Breitenbereichen des Luftsacks (38) eingebunden wird.

4. Verfahren nach Anspruch 3, **dadurch gekennzeichnet, daß** nicht eingebundene Abschnitte der Schußfäden (VS) noch an der Webmaschine vom eben gewebten Luftsack (2) oder Luftschlauch abgetrennt werden.

5. Verfahren nach einem der vorhergehenden Ansprüche, **dadurch gekennzeichnet, daß** als Schußfäden (VS) Monofilfäden eingesetzt werden.

## Claims

1. Method of weaving an at least two-ply, one-piece air bag (2) or air belt on a weaving machine, weft threads varying in denier being woven in at least one ply,
a) weft threads (VS) of a certain denier being picked only over certain warp thread length portions (8, 9), **characterized in that**
b) on the one hand standard weft threads having a first denier (BS) and, on the other, weft threads (VS) having an at least 25% higher second denier are picked, and
c) the weft threads (VS) having the higher second denier are picked with no change in the weft set.

2. The method as set forth in claim 1, **characterized in that** the weft threads (VS) are picked in a higher third denier.

3. The method as set forth in claim 1 or 2, **characterized in that** part of the the weft threads (VS) is included in the weave only in certain width portions of the air bag (38).

4. The method as set forth in claim 3, **characterized in that** portions of the weft threads (VS) not included in the weave are separated from the newly woven air bag (2) or air belt while still on the weaving machine.

5. The method as set forth in any of the preceding claims, **characterized in that** monofilament threads are employed as weft threads (VS).

## Revendications

1. Procédé de tissage d'un sac gonflable ou d'un tuyau gonflable d'une pièce (2) consistant au moins en deux couches sur un métier à tisser, au moins dans une couche étant tissés des fils de trame d'épaisseurs différentes,
a) des fils de trame (VS) d'une épaisseur déterminée étant introduits sur des zones de longueur déterminée de fils de chaîne (8, 9),
**caractérisé en ce que**
b) d'une part des fils de trame standard d'une première épaisseur de fil (BS) et d'autre part des fils de trame (VS) présentant une seconde épaisseur de fil d'au moins 25 % supérieure sont introduits, et
c) les fils de trame (VS) présentant la seconde épaisseur de fil plus élevée sont introduits à densité de trame inchangée.

2. Procédé selon la revendication 1, **caractérisé en ce que** des fils de trame (VS) d'une troisième épaisseur de fil plus élevée sont introduits.

3. Procédé selon la revendication 1 ou 2, **caractérisé en ce qu'**une partie des fils de trame (VS) n'est intégrée que dans des zones de largeur déterminée du sac gonflable (38).

4. Procédé selon la revendication 3, **caractérisé en ce que** des sections de fils de trame (VS) non intégrées sont séparées encore sur le métier à tisser du sac gonflable (2) ou du tuyau gonflable qui viennent d'être tissés.

5. Procédé selon l'une quelconque des revendications précédentes, **caractérisé en ce que** des fils monofils sont utilisés comme fil de trame.
